# EUROPEAN PATENT APPLICATION

(11) **EP 2 685 427 A2**
(43) Date of publication of application: **15.01.2014**
(21) Application number: 13164631.7
(22) Date of filing: 22.04.2013
(51) Int. Cl.: G06T 19/00

(54) **Mobile Terminal and Control Method Thereof**

(30) Priority: 10.07.2012 KR 20120075195
(71) Applicant: LG Electronics, Inc., Seoul, 150-721 (KR)
(72) Inventor: Kim, Daehwan, Seoul (KR); Hong, Yoonki, Seoul (KR)
(74) Representative: Urner, Peter

(57) **Abstract**

A mobile terminal and a control method thereof, which can obtain an image, are provided. A mobile terminal (100) includes a camera unit (121), a pictogram extraction unit (182) and a controller (180). The camera unit (121) obtains image information corresponding to at least one of a still image and a moving image. The pictogram extraction unit (182) extracts at least one pictogram from the obtained image information. The controller (180) detects information related to the extracted pictogram, and displays the detected information to be overlapped with the obtained image information. In the mobile terminal, the controller (180) includes, as the detected information, at least one of previously recorded information and currently searched information related to the extracted pictogram.

## Description

### BACKGROUND OF THE INVENTION

### 1. Field of the Invention

The present disclosure relates to a mobile terminal, and particularly, to a mobile terminal and a control method thereof, which can obtain an image.

### 2. Description of the Conventional Art

Terminals can be divided into mobile/portable terminals and stationary terminals according to their mobility. The portable terminals can be divided into handheld terminals and vehicle mount terminals according to whether a user directly carries his or her terminal.

As such a mobile terminal becomes multifunctional, the mobile terminal can be allowed to capture still images or moving images, play music or video files, play games, receive broadcast, etc., so as to be implemented as an integrated multimedia player. In order to support and enhance such functions of the terminal, it can be considered to improve configuration and/or software of the terminal.

Under the influence of the improvement, the mobile terminal can have an augmented reality function. The augmented reality function refers to a function of displaying an image obtained by overlapping a 3D virtual image with an actual image. The mobile terminal displays, on a display unit, an image obtained by overlapping a 3D virtual image with an image obtained from the outside thereof, so that it is possible to provide a user with better reality and additional information. Meanwhile, each country establishes pictograms as a country standard as a part of social infrastructures. Accordingly, it is required to provide an augmented reality function using pictograms read from the outside of a mobile terminal.

### SUMMARY OF THE INVENTION

Therefore, an aspect of the detailed description is to provide a mobile terminal and a control method thereof, which can perform an augmented reality function using pictograms read from the outside of the mobile terminal.

To achieve these and other advantages and in accordance with the purpose of this specification, as embodied and broadly described herein, a mobile terminal includes a camera unit configured to obtain image information corresponding to at least one of a still image and a moving image; a pictogram extraction unit configured to extract at least one pictogram from the obtained image information; and a controller configured to detect information related to the extracted pictogram, and display the detected information to be overlapped with the obtained image information, wherein the controller includes, as the detected information, at least one of previously recorded information and currently searched information related to the extracted pictogram.

In one exemplary embodiment, the pictogram extraction unit may extract feature points of objectives included in the image information, based on edge information and outline information of the objectives included in the image information, and extract the pictogram corresponding to the extracted feature point from the previously recorded information.

In one exemplary embodiment, the mobile terminal may further include a display unit. When not being able to extract the pictogram corresponding to the extracted feature point from the previously recorded information, the pictogram extraction unit may display pictograms having similar feature points on the display unit, based on the extracted feature point.

In one exemplary embodiment, the controller may recognize the selected pictogram as a pictogram corresponding to the extracted feature point, based on a user's selection from the pictograms displayed on the display unit.

In one exemplary embodiment, the information related to the extracted pictogram may include a pictogram image corresponding to the extracted pictogram. The controller may select at least some of the pictograms included in the image information, and display, on the display unit, pictogram images respectively corresponding to the selected pictograms together with the selected pictograms.

In one exemplary embodiment, the controller may select the at least some of the pictograms included in the image information, based on the user's selection, or select the at least some of the pictograms included in the image information, based on at least one of information on use frequency and information on distance to a terminal main body.

In one exemplary embodiment, the controller may display the pictogram images to be respectively overlapped with the selected pictograms corresponding to the pictogram images, or display the pictogram images at positions adjacent to the respective selected pictograms.

In one exemplary embodiment, the controller may control graphic information of the pictogram images, based on the at least one of the information on use frequency and the information on distance to the terminal main body.

In one exemplary embodiment, the graphic information comprises at least a color, a shape, a size transparency or a 3D depth of the corresponding displayed pictogram image.

In one exemplary embodiment, the information related to the extracted pictogram may include at least one of information on the direction toward a destination corresponding to the extracted pictogram and information on the distance to the destination. The controller may select at least some of the pictograms included in the image information, and display, on the display unit, the at least one of the information on the direction toward the destination corresponding to the extracted pictogram and the information on the distance to the destination together with the selected pictograms.

In one exemplary embodiment, the controller may display the at least one of the information on the direction toward the destination and the information on the distance to the destination to be overlapped with each of the selected pictograms, or display the at least one of the information on the direction toward the destination and the information on the distance to the destination at a position adjacent to each of the selected pictogram.

In one exemplary embodiment, the controller may receive current position information, using at least one of a global positioning system (GPS) and an access point (AP), detect destination position information according to the current position information from the previously recorded information, and detect the information on the direction toward the destination corresponding to the extracted pictogram and the information on the distance to the destination, using the destination position information.

In one exemplary embodiment, the mobile terminal may further include a gyro sensor configured to sense a direction of the terminal main body. The controller may control the information on the direction toward the destination corresponding to the selected pictogram, based on the direction of the terminal main body.

To achieve these and other advantages and in accordance with the purpose of this specification, as embodied and broadly described herein, a control method of a mobile terminal includes obtaining image information corresponding to at least one of a still image and a moving image; extracting at least one pictogram from the obtained image information; detecting information related to the extracted pictogram; and displaying the detected information to be overlapped with the obtained image information, wherein at least one of previously recorded information and currently searched information related to the extracted pictogram is included as the detected information.

In one exemplary embodiment, the extracting of the at least one pictogram from the obtained image information may include extracting feature points of objectives included in the image information, based on edge information and outline information of the objectives included in the image information; and extracting the pictogram corresponding to the extracted feature point from the previously recorded information.

In one exemplary embodiment, the extracting of the at least one pictogram from the obtained image information may include displaying pictograms having similar feature points on a display unit, based on the extracted feature point, when not being able to extract the pictogram corresponding to the extracted feature point from the previously recorded information.

In one exemplary embodiment, the extracting of the at least one pictogram from the obtained image information may include recognizing the selected pictogram as a pictogram corresponding to the extracted feature point, based on a user's selection from the pictograms displayed on the display unit.

In one exemplary embodiment, the information related to the extracted pictogram may include a pictogram image corresponding to the extracted pictogram. The displaying of the detected information to be overlapped with the obtained image information may include selecting at least some of the pictograms included in the image information; and displaying, on the display unit, pictogram images respectively corresponding to the selected pictograms together with the selected pictograms.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram illustrating a mobile terminal related to the present invention;
FIGS. 2A and 2B are perspective views illustrating exterior appearances of the mobile terminal related to the present invention;
FIG. 3 is a flowchart illustrating an exemplary embodiment of the mobile terminal related to the present invention; and
FIGS. 4 to 16 are conceptual views illustrating operation examples of the mobile terminal according to FIG. 3.

### DETAILED DESCRIPTION OF EXEMPLARY EMBODIMENTS

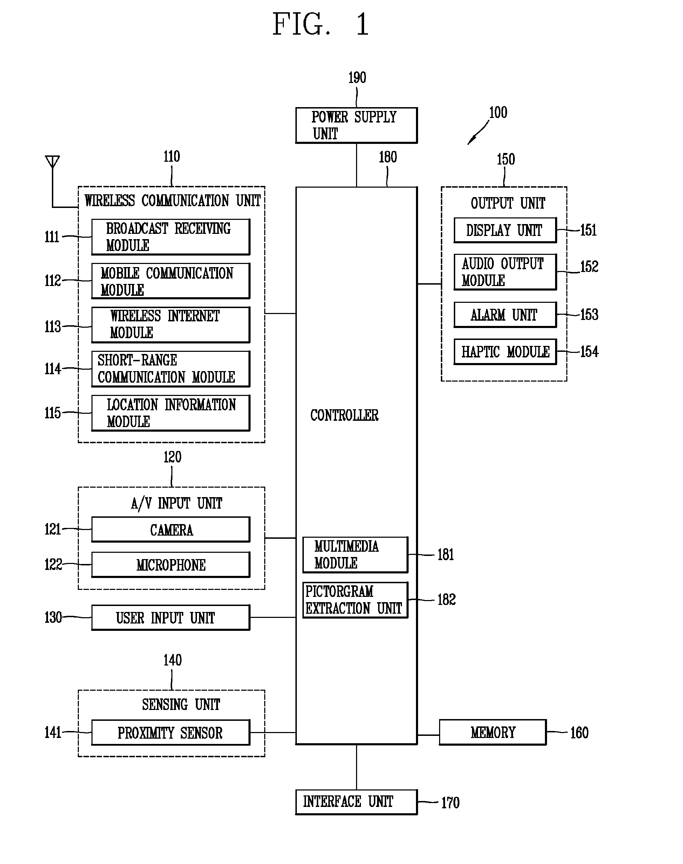

FIG. 1 is a block diagram of a mobile terminal 100 according to an embodiment of the present invention.

As shown in FIG. 1, the mobile terminal 100 includes a wireless communication unit 110, an A/V (Audio/Video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. The mobile terminal 100 may be implemented by greater or fewer components.

Hereinafter, each of the above components 110∼190 will be explained.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel. The broadcast associated information may refer to information associated with a broadcast channel, a broadcast program or a broadcast service provider. The broadcast associated information may also be provided via a mobile communication network and, in this case, the broadcast associated information may be received by the mobile communication module 112. Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The wireless Internet module 113 supports wireless Internet access for the mobile communication terminal. This module may be internally or externally coupled to the mobile terminal 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short-range communication module 114 is a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the like.

The location information module 115 is a module for acquiring a location (or position) of the mobile communication terminal. For example, the location information module 115 may include a GPS (Global Positioning System) module.

The A/V input unit 120 is configured to receive an audio or video signal. The A/V input unit 120 may include a camera 121 and a microphone 122. The camera 121 processes image data of still pictures or video acquired by an image capture device in a video capturing mode or an image capturing mode. The processed image frames may be displayed on a display unit 151. The image frames processed by the camera 121 may be stored in the memory 160 or transmitted via the wireless communication unit 110. Two or more cameras 121 may be provided according to the configuration of the mobile communication terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of a user's touch (contact) with the mobile terminal 100 (e.g., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The sensing unit 140 may include a proximity sensor 141. And, the sensing unit 140 may include a touch sensor (not shown) for sensing a touch operation with respect to the display unit 151.

The touch sensor may be implemented as a touch film, a touch sheet, a touch pad, and the like. The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

If the touch sensor and the display unit 151 have a layered structure therebetween, the display unit 151 may be used as an input device rather than an output device. Such display unit 151 may be called a 'touch screen'.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

When the touch screen is implemented as a capacitance type, proximity of a pointer to the touch screen is sensed by changes of an electromagnetic field. In this case, the touch screen (touch sensor) may be categorized into a proximity sensor 141.

The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor. The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on.

In the following description, for the sake of brevity, recognition of the pointer positioned to be close to the touch screen without being contacted will be called a 'proximity touch', while recognition of actual contacting of the pointer on the touch screen will be called a 'contact touch'.

The proximity sensor 141 detects a proximity touch and a proximity touch pattern (e.g., a proximity touch distance, a proximity touch speed, a proximity touch time, a proximity touch position, a proximity touch movement state, or the like), and information corresponding to the detected proximity touch operation and the proximity touch pattern can be outputted to the touch screen.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, a haptic module 154, and the like.

The display unit 151 may display information processed in the mobile terminal 100. For example, when the mobile terminal 100 is in a phone call mode, the display unit 151 may display a User Interface (Ul) or a Graphic User Interface (GUI) associated with a call. When the mobile terminal 100 is in a video call mode or a capturing mode, the display unit 151 may display a captured and/or received image or a GUI or a UI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of these displays may be configured to be transparent so that outside may be seen therethrough, which may be referred to as a transparent display. A representative example of this transparent display may include a transparent organic light emitting diode (TOLED), etc. The rear surface portion of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of displays may be arranged on one surface integrally or separately, or may be arranged on different surfaces.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., a call signal reception sound, a message reception sound, etc.) performed in the mobile terminal 100. The audio output module 152 may include a receiver, a speaker, a buzzer, etc.

The alarm unit 153 outputs a signal for informing about an occurrence of an event of the mobile terminal 100. Events generated in the mobile terminal may include call signal reception, message reception, key signal inputs, and the like. In addition to video or audio signals, the alarm unit 153 may output signals in a different manner, for example, to inform about an occurrence of an event. For example, the alarm unit 153 may output a signal in the form of vibration. Such video signal or audio signal may be output through the display unit 151 or the audio output module 152. Accordingly, the display unit 151 or the audio output module 152 may be categorized into part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a map data, phonebook, messages, still images, video, etc.) that are inputted or outputted. The memory 160 may store therein data on vibrations and sounds of various patterns output when a touch is input onto the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

Here, the identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data and a pictogram extraction unit 182 for extracting pictograms. The multimedia module 181 may be configured within the controller 180 or may be configured to be separated from the controller 180. The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

Hereinafter, will be explained a method for processing a user's input to the mobile terminal 100.

The user input unit 130 is manipulated to receive a command for controlling the operation of the mobile terminal 100, and may include a plurality of manipulation units. The manipulation units may be referred to as manipulating portions, and may include any type of ones that can be manipulated in a user's tactile manner.

Various types of visible information may be displayed on the display unit 151. Such information may be displayed in several forms, such as character, number, symbol, graphic, icon or the like. Alternatively, such information may be implemented as a 3D stereoscopic image. For input of the information, at least one of characters, numbers, graphics or icons may be arranged and displayed in a preset configuration, thus being implemented in the form of a keypad. Such keypad may be called 'soft key.'

The display unit 151 may be operated as a single entire region or by being divided into a plurality of regions. For the latter, the plurality of regions may cooperate with one another. For example, an output window and an input window may be displayed at upper and lower portions of the display unit 151, respectively. Soft keys representing numbers for inputting telephone numbers or the like may be output on the input window. When a soft key is touched, a number or the like corresponding to the touched soft key is output on the output window. Upon manipulating the manipulation unit, a call connection for a telephone number displayed on the output window is attempted, or a text output on the output window may be input to an application.

In addition to the input manner illustrated in the embodiments, the display unit 151 or the touch pad may be scrolled to receive a touch input. A user may scroll the display unit 151 or the touch pad to move a cursor or pointer positioned on an object (subject), e.g., an icon or the like, displayed on the display unit 151. In addition, in case of moving a finger on the display unit 151 or the touch pad, the path of the finger being moved may be visibly displayed on the display unit 151, which can be useful upon editing an image displayed on the display unit 151.

One function of the mobile terminal may be executed in correspondence with a case where the display unit 151 (touch screen) and the touch pad are touched together within a preset time. An example of being touched together may include clamping a body with the user's thumb and index fingers. The one function, for example, may be activating or deactivating of the display unit 151 or the touch pad.

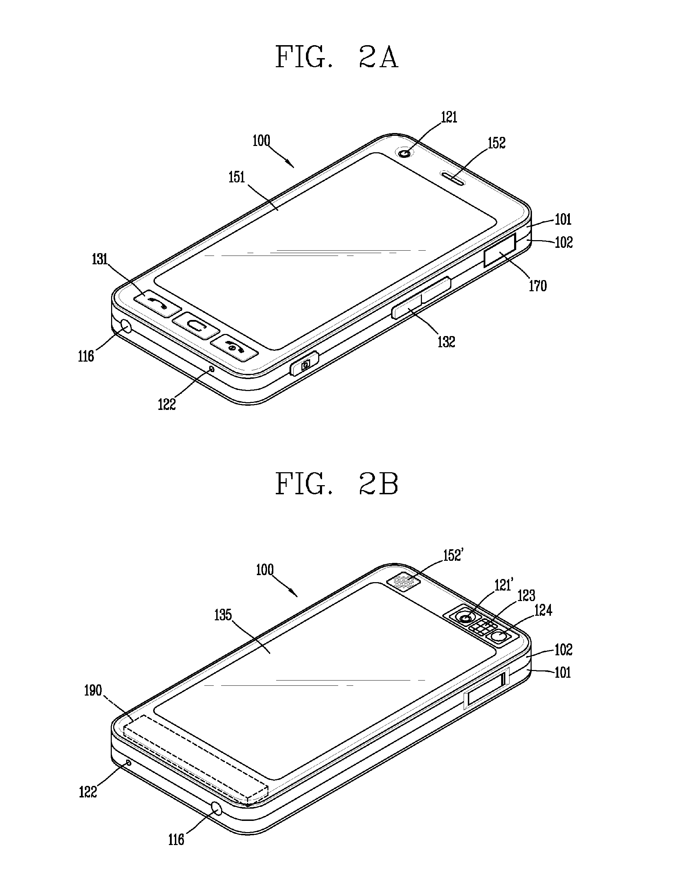

FIGS. 2A and 2B are perspective views showing the appearance of the mobile terminal 100 according to the present invention. FIG. 2A is a view showing a front surface and one side surface of the mobile terminal 100 in accordance with the present invention, and FIG. 2B is a view showing a rear surface and another side surface of the mobile terminal 100 of FIG. 2A.

As shown in FIG. 2A, the mobile terminal 100 is a bar type mobile terminal. However, the present invention is not limited to this, but may be applied to a slide type in which two or more bodies are coupled to each other so as to perform a relative motion, a folder type, or a swing type, a swivel type and the like.

A case (casing, housing, cover, etc.) forming an outer appearance of a body may include a front case 101 and a rear case 102. A space formed by the front case 101 and the rear case 102 may accommodate various components therein. At least one intermediate case may further be disposed between the front case 101 and the rear case 102.

Such cases may be formed by injection-molded synthetic resin, or may be formed using a metallic material such as stainless steel (STS) or titanium (Ti).

At the front case 101, may be disposed a display unit 151, an audio output unit 152, a camera 121, a user input unit 130 (refer to FIG. 1), a microphone 122, an interface unit 170, etc.

The display unit 151 occupies most parts of a main surface of the front case 101. The audio output unit 152 and the camera 121 are arranged at a region adjacent to one end of the display unit 151, and the user input unit 131 and the microphone 122 are arranged at a region adjacent to another end of the display unit 151. The user input unit 132, the interface unit 170, etc. may be arranged on side surfaces of the front case 101 and the rear case 102.

The user input unit 130 is manipulated to receive a command for controlling the operation of the mobile terminal 100, and may include a plurality of manipulation units 131 and 132.

The manipulation units 131 and 132 may receive various commands. For instance, the first manipulation 131 is configured to input commands such as START, END, SCROLL or the like, and the second manipulation unit 132 is configured to input commands for controlling a level of sound outputted from the audio output unit 152, or commands for converting the current mode of the display unit 151 to a touch recognition mode.

Referring to FIG. 2B, a camera 121' may be additionally provided on the rear case 102. The camera 121' faces a direction which is opposite to a direction faced by the camera 121 (refer to FIG. 2A), and may have different pixels from those of the camera 121.

For example, the camera 121 may operate with relatively lower pixels (lower resolution). Thus, the camera 121 may be useful when a user can capture his face and send it to another party during a video call or the like. On the other hand, the camera 121' may operate with a relatively higher pixels (higher resolution) such that it can be useful for a user to obtain higher quality pictures for later use.

The cameras 121 and 121' may be installed at the terminal body so as to rotate or pop-up.

A flash 123 and a mirror 124 may be additionally disposed close to the camera 121'. The flash 123 operates in conjunction with the camera 121' when taking a picture using the camera 121'. The mirror 124 can cooperate with the camera 121' to allow a user to photograph himself in a self-portrait mode.

An audio output unit 152' may be additionally arranged on a rear surface of the terminal body. The audio output unit 152' may cooperate with the audio output unit 152 (refer to FIG. 2A) disposed on a front surface of the terminal body so as to implement a stereo function. Also, the audio output unit 152' may be configured to operate as a speakerphone.

A broadcast signal receiving antenna 116 as well as an antenna for calling may be additionally disposed on a side surface of the terminal body. The broadcast signal receiving antenna 116 of the broadcast receiving module 111 (refer to FIG. 1) may be configured to retract into the terminal body.

A power supply unit 190 for supplying power to the mobile terminal 100 is mounted to the body. The power supply unit 190 may be mounted in the body, or may be detachably mounted to the body.

A touch pad 135 for sensing touch may be additionally mounted to the rear case 102. Like the display unit 151 (refer to FIG. 2A), the touch pad 135 may be formed to be light-transmissive. The touch pad 135 may be also additionally mounted with a rear display unit for outputting visual information. Information output from the display unit 151 (front display) and the rear display can be controlled by the touch pad 135.

The touch pad 135 operates in association with the display unit 151. The touch pad 135 may be disposed on the rear surface of the display unit 151 in parallel. The touch pad 135 may have a size equal to or smaller than that of the display unit 151.

The mobile terminal 100 may have an augmented reality function. The augmented reality function refers to a function of displaying an image obtained by overlapping a 3D virtual image with an actual image. The mobile terminal 100 displays, on the display unit 151, an image obtained by overlapping a 3D virtual image with an image obtained from the outside thereof, so that it is possible to provide a user with better reality and additional information.

Meanwhile, each country establishes pictograms as a country standard as a part of social infrastructures. The pictogram refers to a symbolic character made so that a user can simply and quickly recognize the meaning of an object in a visual manner by representing an object, facility, action, concept, etc. as a symbolized pictograph. According to the generation of pictograms, it is required to provide an augmented reality function using pictograms read from the outside of a mobile terminal.

Hereinafter, a mobile terminal 100 and a control method thereof, which can perform an augmented reality function using pictograms read from the outside of the mobile terminal, will be described with reference to the accompanying drawings.

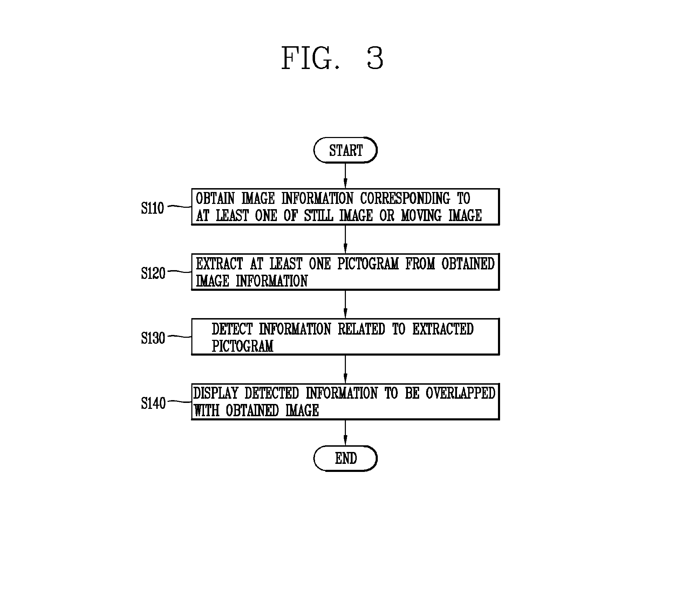

FIG. 3 is a flowchart illustrating an exemplary embodiment of the mobile terminal 100 (See FIG. 1) related to the present disclosure. The mobile terminal includes the camera unit 121 (See FIG. 1), the pictogram extraction unit 182 (See FIG. 1) and the controller 180 (See FIG. 1).

Referring to FIG. 3, image information corresponding to at least one of a still image and a moving image is obtained (S110).

Augmented reality is a field of virtual reality, and refers to a computer graphic technique that allows a virtual object to be look like an object existing in an actual environment by synthesizing the virtual object in the actual environment. Unlike the existing virtual reality based on virtual spaces and virtual objects, the augmented reality is a technique which can be provided to users by synthesizing virtual objects based on a real world and reinforcing additional information difficult to be obtained only in the real world.

Marker-based augmented reality refers to a technique in which when the camera unit 121 photographs a specific building, a specific mark corresponding to the specific building is photographed together with the specific building, and the corresponding building is then recognized by recognizing the specific mark. Sensor-based augmented reality refers to a technique in which the current position of the mobile terminal 100 and the direction in which the mobile terminal faces are estimated using a global positioning system (GPS), a digital compass, etc., which are mounted in the mobile terminal 100, and point of interest (POI) information corresponding to an image in the estimated direction is then overlapped and displayed.

The camera unit 121 may obtain image information corresponding to at least one of a still image and a moving image from the outside of the mobile terminal 100. In this case, as the camera unit 121 obtains the image information, the augmented reality function may be performed. On the other hand, as the augmented reality function is performed, the camera unit 121 may obtain the image information from the outside.

Next, at least one pictogram is extracted from the obtained image information (S120).

Specifically, the pictogram extraction unit 182 may extract a feature point of each objective included in the image information, based on at least one of edge information, outline information, texture information, text information and outer shape information at a specific angle on the objectives included in the obtained image information. The pictogram extraction unit 182 may extract a pictogram corresponding to the extracted feature point from previously recorded information.

Meanwhile, in a case where the pictogram corresponding to the feature point extracted from the previously recorded information cannot be extracted, the pictogram extraction unit 182 may display, on the display unit 151 (See FIG. 1), pictograms having similar feature points, based on the extracted feature point. In this case, the controller 180 may recognize the selected pictogram as a pictogram corresponding to the extracted feature point, based on a user's selection from the pictograms displayed on the display unit 151.

Subsequently, information related to the extracted pictogram is detected (S130), and the detected information is displayed by being overlapped with the obtained image information (S140).

Specifically, the controller 180 may detect information related to the extracted pictogram from at least one of previously recorded information and currently detected information.

The information related to the extracted pictogram may include at least one of a pictogram image corresponding to the extracted pictogram, additional information on a destination corresponding to the extracted pictogram, information on the direction toward a destination corresponding to the extracted pictogram and information on the distance to the destination.

The controller 180 may select at least some of the pictograms included in the image information, based on a user's selection, or may select at least some of the pictograms included in the image information, based on at least one of information on the use frequency and information on the distance to the terminal main body. Subsequently, the controller 180 may display, on the display unit 151, information respectively corresponding to the selected pictograms together with the selected pictograms.

For example, the controller 180 may display at least one of a pictogram image corresponding to the selected pictogram, additional information on a destination corresponding to the selected pictogram, information on the direction toward a destination corresponding to the selected pictogram and information on the distance to the destination to be overlapped with the pictogram corresponding to each pictogram image, or may display at a position adjacent to each pictogram.

Meanwhile, when displaying the pictogram images on the display unit 151, the controller 180 may control graphic information of the pictogram images, based on at least one of information on the use frequency of the pictograms and information on the distance to the terminal main body. In this case, the graphic information of the pictogram images may include at least one of the color, shape, size, transparency and 3D depth of the pictogram images.

Although not shown in this figure, when the mobile terminal 100 is used as a navigator, the pictogram extraction unit 182 may recognize a road sign board.

In this case, the pictogram extraction unit 182 may translate characters included in the road sign board into another language. The language to be translated may be selected by a user, or may be selected by the mobile terminal itself. For example, it is assumed that the characters included in the road sign board are written in Japanese. If the user selects translation of Japanese to Korean, the pictogram extraction unit 182 may translate the characters written in Japanese into Korean and display the translated characters on the display unit 151. The translation function described above can be applied to characters included in geographical destinations, characters included in buildings and characters included in pictograms, as well as characters included in road sign boards.

Accordingly, the controller 180 may display information related to the recognized road sign board on the display unit 151. In a case where contents related to the road sign board are not stored in a database, the controller 180 may store, in the database, at least one of position information and additional information of the road sign board.

As described above, according to the exemplary embodiment, at least one pictogram is extracted from obtained image information, and information related on the extracted pictogram is displayed by being overlapped with the obtained image information, so that the user can easily recognize the position of the pictogram through the display unit 151 even in a strange place and conveniently access information related to the pictogram.

Further, previously recorded information is used as the information related to the extracted pictogram, so that information based on user's experiences can be provided to the user when re-visiting the same place. Accordingly, the user's convenience can be improved.

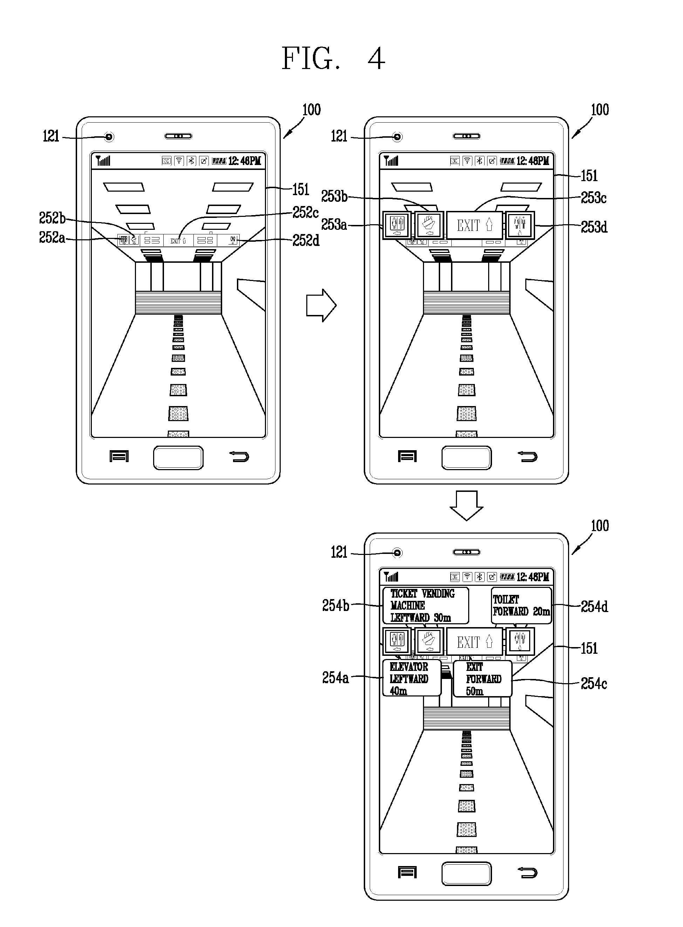

FIG. 4 is a conceptual view illustrating an operation example of a mobile terminal 100 according to FIG. 3. The mobile terminal 100 includes a camera unit 121, a display unit 151, the pictogram extraction unit 182 (See FIG. 1) and the controller 180 (See FIG. 1).

Referring to FIG. 4, the camera unit 121 may obtain image information corresponding to at least one of a still image and a moving image from the outside of the mobile terminal 100. The display unit 151 may display the obtained image information.

The obtained image information may include at least one pictogram 252a to 252d. The pictogram extraction unit 182 may extract the at least one pictogram 252a to 252d from the obtained image information. As shown in this figure, the pictogram extraction unit 182 may extract all the pictograms 252a to 252d included in the image information.

Subsequently, the controller 180 may detect information related to all the extracted pictograms 252a and 252d. Specifically, the controller 180 may detect the information related to the extracted pictograms 252a to 252d from at least one of previously recorded information and currently searched information.

The information related to the extracted pictograms 252a to 252d may include pictogram images 253a to 235d respectively corresponding to the extracted pictograms 252a to 252d. As shown in this FIG. 4, the controller 180 may display, on the display unit 151, the pictogram images 253a to 253d together with the pictograms 252a to 252d. That is, the controller 180 may display the pictogram images 253a to 253d to be respectively overlapped with the pictograms 252a to 252d or may display the pictogram images 253a to 253d at positions adjacent to the respective pictograms 252a to 252d.

Meanwhile, the information related to the extracted pictograms 252a to 252d may include information on the direction toward a destination corresponding to each of the pictograms 252a to 252d and information on the distance to the destination corresponding to the each of the pictograms 252a to 252d. As shown in this FIG. 4, the controller 180 may display, on the display unit 151, the information on the direction toward a destination corresponding to each of the pictograms 252a to 252d and the information on the distance to the destination corresponding to the each of the pictograms 252a to 252d together with the pictograms 252a to 252d. As described above, the information 254a to 254d on the direction and the distance may be information read from previously recorded information or information currently searched from a server or network.

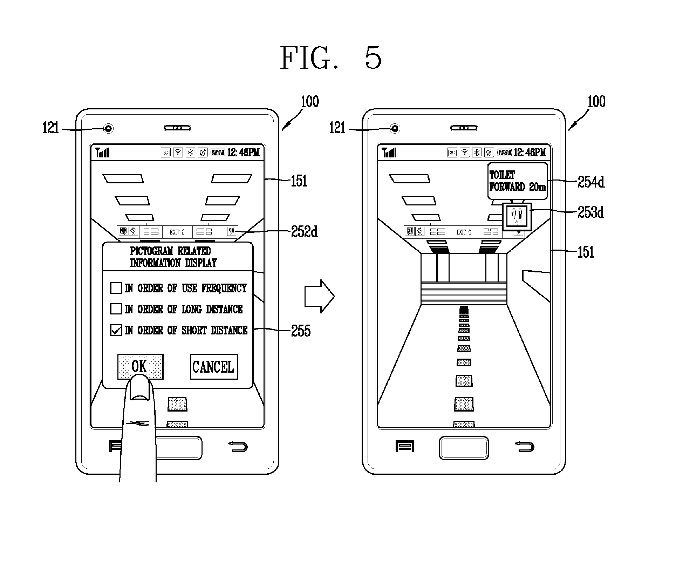

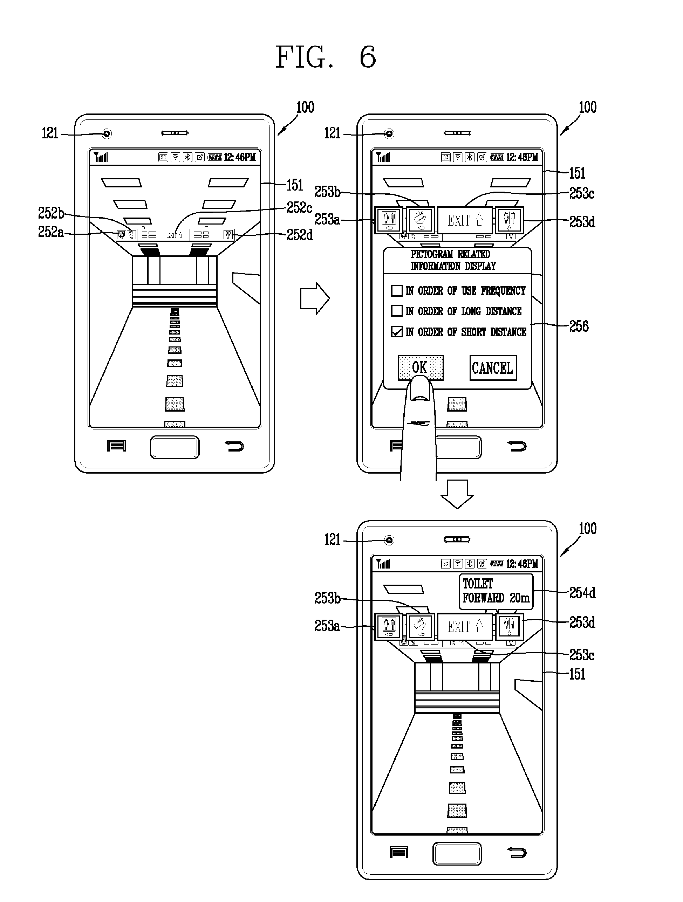

FIGS. 5 and 6 are conceptual views illustrating operation examples of the mobile terminal 100 according to FIG. 3. The mobile terminal 100 includes the camera unit 121, the display unit 151, the pictogram extraction unit 182 (See FIG. 1) and the controller 180 (See FIG. 1).

Referring to FIGS. 5 and 6, the display unit 151 may display image information obtained from the camera unit 121. The obtained image information may include at least one pictogram (252a to 252d).

The controller 180 may select at least some of the pictograms 252a to 252d included in the image information. Specifically, the controller 180 may select at least some of the pictograms 252a to 252d included in the image information, based on at least one of information on the use frequency of each pictogram and information on the distance to the terminal main body from each pictogram.

To this end, the display unit 151 may display a popup window 255 or 256 configured to select whether to select some of the pictograms 252a to 252d, based on condition information for selecting some of the pictograms 252a to 252d, e.g., any one of the information on the use frequency and information on the distance to the terminal main body.

As shown in FIG. 5, in a case where a user selects a destination nearest the terminal main body as the condition information on the popup window 255, the controller 180 may select the pictogram 252d corresponding to the destination nearest the terminal main body. Subsequently, the controller 180 may display, on the display unit 151, a pictogram image 253d corresponding to the selected pictogram 252d and information 254d on the direction toward the destination and the distance to the destination together with the pictogram 252d.

As shown in FIG. 6, in a case where the user selects a destination nearest the terminal main body as condition information in the state in which pictogram images 253a to 253d and the popup window 256 are displayed on the display unit 151, the controller 180 may select the pictogram 252d corresponding to the destination nearest the terminal main body. Subsequently, the controller 180 may display, on the display unit 151, the information 254d on the direction toward a destination corresponding to the selected pictogram 252d and the distance to the destination together with the pictogram 252d and the pictogram image 253d.

Although not shown in these figures, in a case where the user selects another pictogram 252a to 252c or another pictogram image 253a to 253c, the controller 180 may display, on the display unit 151, the information on the direction toward a destination corresponding to the selected pictogram and the distance to the destination together with the selected pictogram.

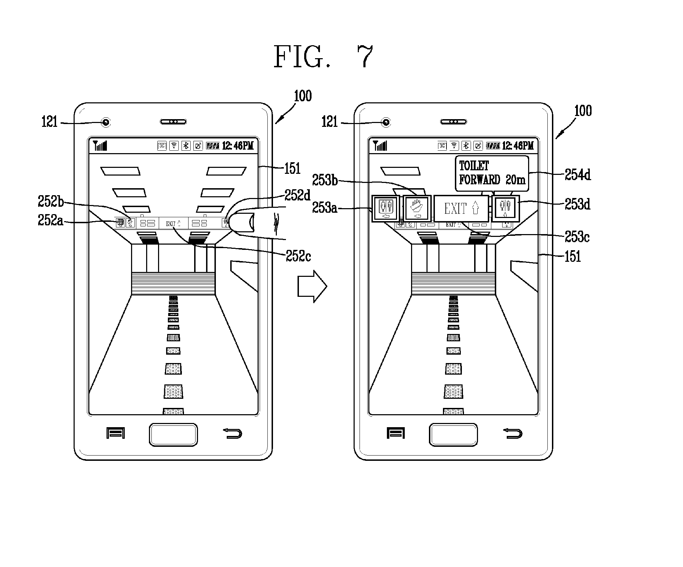

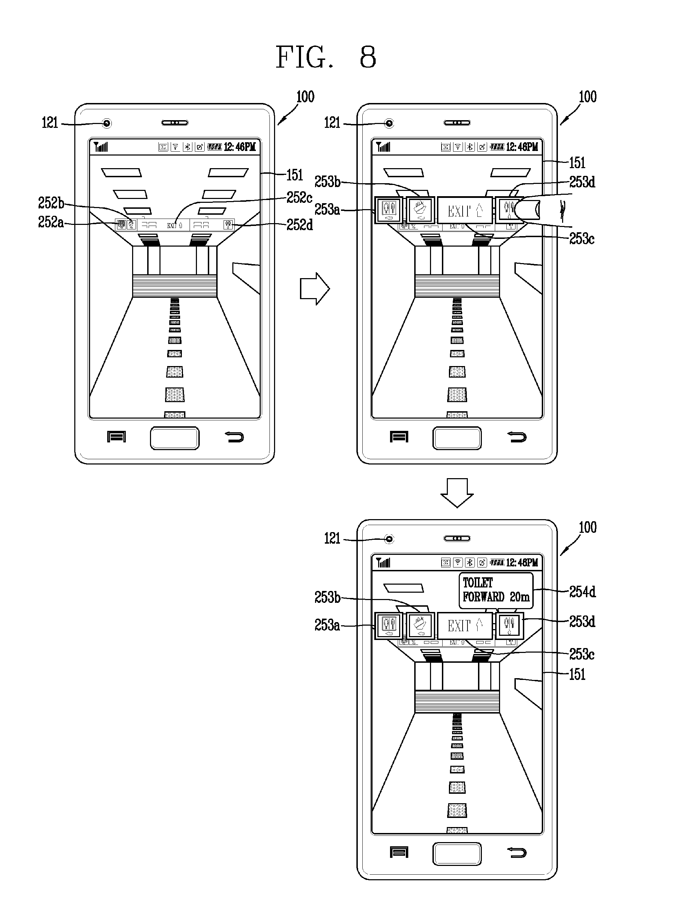

FIGS. 7 and 8 are conceptual views illustrating operation examples of the mobile terminal 100 according to FIG. 3. The mobile terminal 100 includes the camera unit 121, the display unit 151, the pictogram extraction unit 182 (See FIG. 1) and the controller 180 (See FIG. 1).

Referring to FIGS. 7 and 8, the display unit 151 may display image information obtained from the camera unit 121. The obtained image information may include at least one pictogram 252a to 252d.

The controller 180 may select at least some of the pictograms 252a to 252d included in the image information. Specifically, the controller 180 may select at least some of the pictograms 252a to 252d included in the image information, based on a user's selection.

As shown in FIG. 8, in a case where a user selects any one 252d of the pictograms 252a to 252d, the controller 180 may display, on the display unit 151, a pictogram image 253d corresponding to the selected pictogram 252d and information 254d on the direction toward a destination corresponding to the selected pictogram 252d and the distance to the destination together with the pictogram 252d.

As shown in FIG. 8, in a case where the user selects any one 253d of pictogram images 253a to 253d in the state in which the pictogram images 253a to 253d respectively corresponding to the pictograms 252a to 252d are displayed on the display unit 151, the controller 180 may display, on the display unit 151, the information 254d on the direction toward a destination corresponding to the selected pictogram image 253d and the distance to the destination together with the selected pictogram image 253d.

Although not shown in these figures, the controller 180 may store current position information and the selected pictogram 252d in the memory 160 (See FIG. 1).

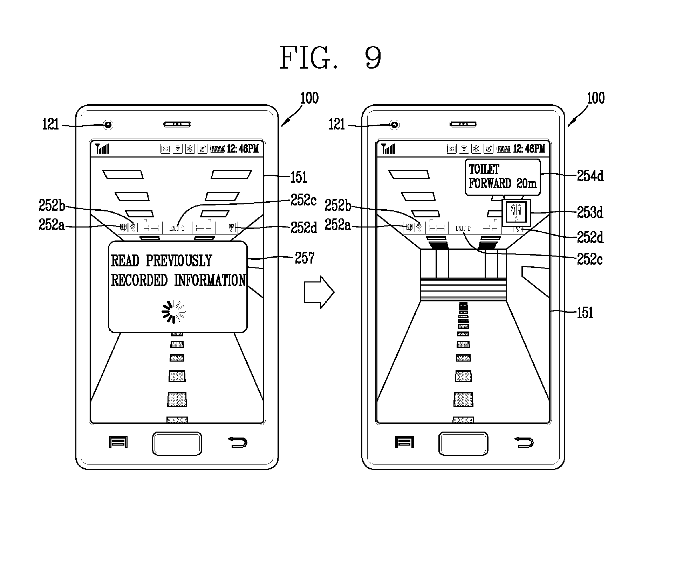

Accordingly, in a case where it is sensed that the terminal main body again exists at the present position later, the control unit 180, as shown in FIG. 9, may display a popup window 257 representing that previously recorded information is read on the display unit 151. Subsequently, the controller 180 may immediately display, on the display unit 151, the pictogram image 253d corresponding to the stored pictogram 252d and the information 254d on the direction toward the destination corresponding to the pictogram 252d and the distance to the destination together with the image information obtained from the outside of the terminal 100.

Although not shown in these figures, in a case where it is sensed that the terminal main body again exists at the present position later, the controller 180 may display the pictogram image 253d corresponding to the stored pictogram 252d to be highlighted while displaying the pictogram images 253a and 253d on the display unit 151. For example, the pictogram image 253d corresponding to the stored pictogram 252d may be displayed larger than the other pictogram images 253a to 253c.

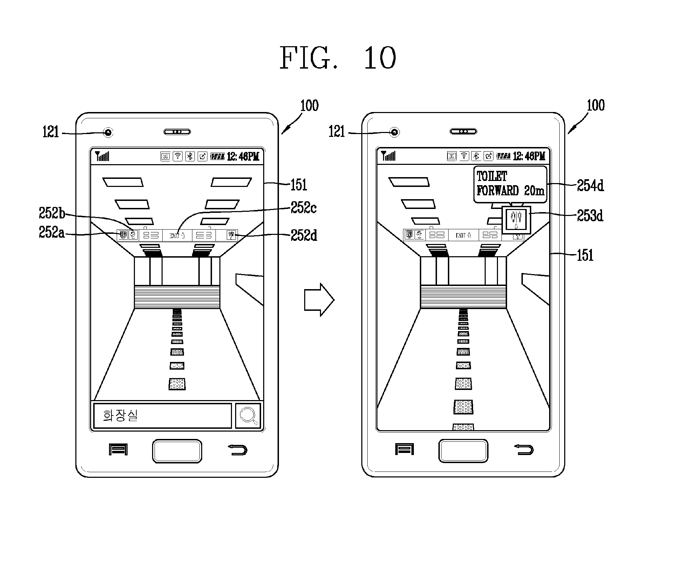

FIG. 10 is a conceptual view illustrating an operation example of the mobile terminal 100 according to FIG. 3. The mobile terminal 100 includes the camera unit 121, the display unit 151, the pictogram extraction unit 182 (See FIG. 1) and the controller 180 (See FIG. 1).

Referring to FIG. 10, the display unit 151 may display image information obtained from the camera unit 121. The obtained image information may include at least one pictogram 252a to 252d.

The controller 180 may display a search window on the display unit 151. In a case where a user inputs information related to a pictogram on the search window, the controller 180 may select at least one of the pictograms 252a to 252d, based on the input information.

For example, in a case where the user inputs 'Toilet' on the search window as shown in this figure, the controller 180 may select a pictogram 252d related to the toilet among the pictograms 252a to 252d. Subsequently, the display unit 151 may immediately display, on the display unit 151, a pictogram image 253d corresponding to the pictogram 252d related to the toilet and information on the direction toward the toilet and the distance to the toilet.

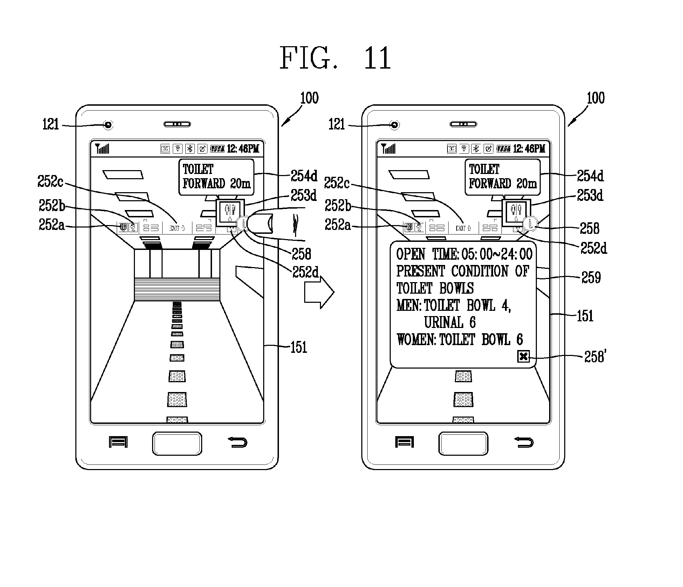

FIG. 11 is a conceptual view illustrating an operation example of the mobile terminal 100 according to FIG. 3. The mobile terminal 100 includes the camera unit 121, the display unit 151, the pictogram extraction unit 182 (See FIG. 1) and the controller 180 (See FIG. 1).

Referring to FIG. 11, the display unit 151 may display image information obtained from the camera unit 121. The obtained image information may include at least one pictogram 252a to 252d.

The controller 180 may display, on the display unit 151, an icon 258 for further displaying additional information on a destination corresponding to the selected pictogram 252d together with a pictogram image 253d corresponding to the pictogram 252d and information 254d on the direction toward a destination corresponding to the pictogram 252d and the distance to the destination.

In a case where the user touches the icon 258, the controller 180 may display, on the display unit 151, additional information 259 on the destination corresponding to the pictogram 252d. The additional information 259 may be information read from the previously recorded information or may be information currently searched from the server or network. In this case, a popup window for displaying the additional information 259 may include an icon 258' for terminating the display of the additional information 259.

Although not shown in this figure, in a case where the user touches the pictogram 252d or the pictogram image 253d, the controller 180 may also display, on the display unit 151, additional information on the destination corresponding to the pictogram as described above.

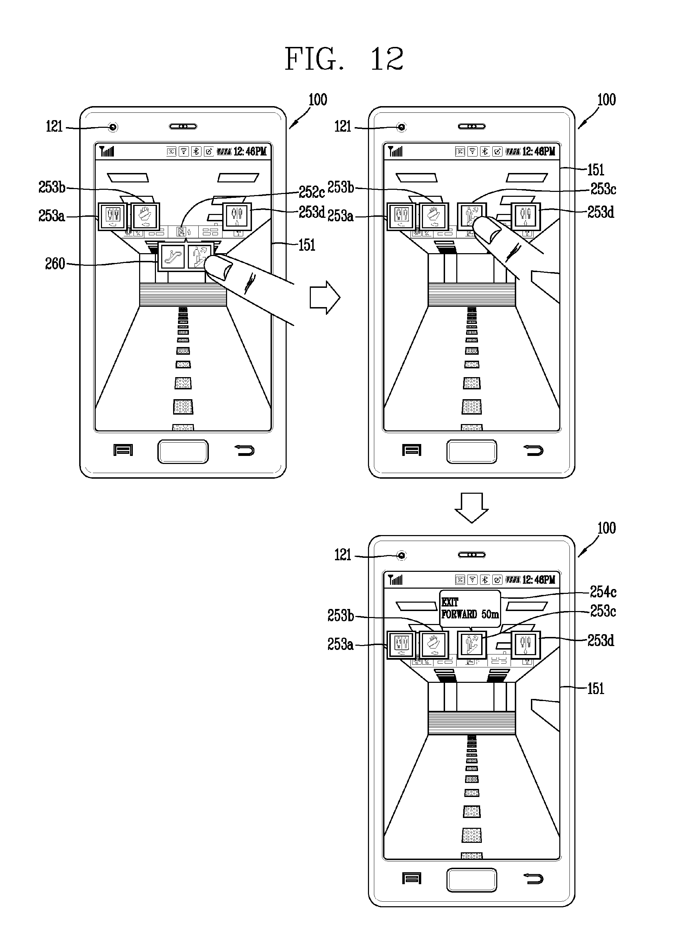

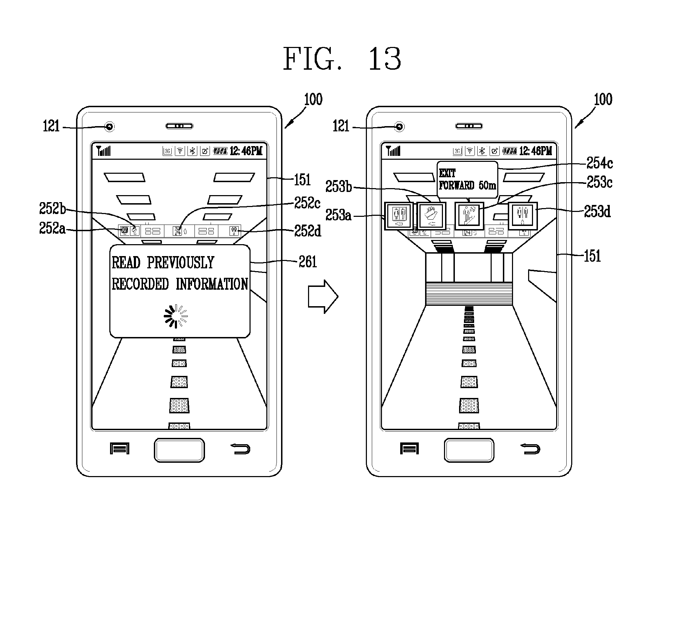

FIGS. 12 and 13 are conceptual views illustrating operation examples of the mobile terminal 100 according to FIG. 3. The mobile terminal 100 includes the camera unit 121, the display unit 151, the pictogram extraction unit 182 (See FIG. 1) and the controller 180 (See FIG. 1).

Referring to FIG. 12, the display unit 151 may display image information obtained from the camera unit 121. The obtained image information may include at least one pictogram 252a to 252d.

The pictogram extraction unit 182 may extract a feature point of each objective included in the image information, based on at least one of edge information, outline information, texture information, text information and outer shape information at a specific angle on the objectives included in the obtained image information. The pictogram extraction unit 182 may extract a pictogram corresponding to the extracted feature point from previously recorded information.

However, in a case where the pictogram extraction unit 182 cannot extract a pictogram corresponding to the feature point extracted from the previously recorded information, the pictogram extraction unit 182 may display, on the display unit 151, pictograms having similar feature points, based on the extracted feature point.

As shown in this FIG. 12, an objective 252c cannot be extracted a pictogram. The pictogram extraction unit 182 may display, on the display unit 151, pictogram images 260 having similar feature points together with the objective 252c, based on the feature point of the objective 252c. In this case, the pictogram images 260 having the similar feature points may be pictogram images read from the previously recorded information or may be pictogram images currently searched from the server to the network.

Subsequently, the controller 180 may recognize a pictogram image 253 as the pictogram image corresponding to the objective 252c, based on a user's selection from the pictogram images 260 having the similar feature points, displayed on the display unit 151. Accordingly, the controller 180 can display, on the display unit 151, the selected pictogram image 253c together with the objective 252c. The controller 180 may display, on the display unit 151, information 254c on the direction toward a destination corresponding to the selected pictogram image 253c and the distance to the destination.

Although not shown in this figure, the controller 180 may store the selected pictogram image 253c in the memory 160 (See FIG. 1).

Accordingly, in a case where it is sensed that the mobile terminal body again exists at the current position later, and the same objective 252c is included in the obtained image, the controller 180, as shown in FIG. 13, may display, on the display unit 151, a popup window 261 representing that previously recorded information is read on the display unit 151. Subsequently, the controller 180 may immediately display, on the display unit 151, a pictogram image 253c corresponding to the objective 252c and information 254c on the direction toward a destination corresponding to the pictogram image 253c and the distance to the destination together with the image information obtained from the outside of the mobile terminal 100.

Although not shown in this figure, the mobile terminal 100 may recognize a country using a mobile network code (MNC). Accordingly, the pictogram extraction unit 182 can recognize pictograms to which characteristics of the country are reflected according to information on the recognized country. To this end, the pictogram extraction unit 182 may receive pictogram information from the server.

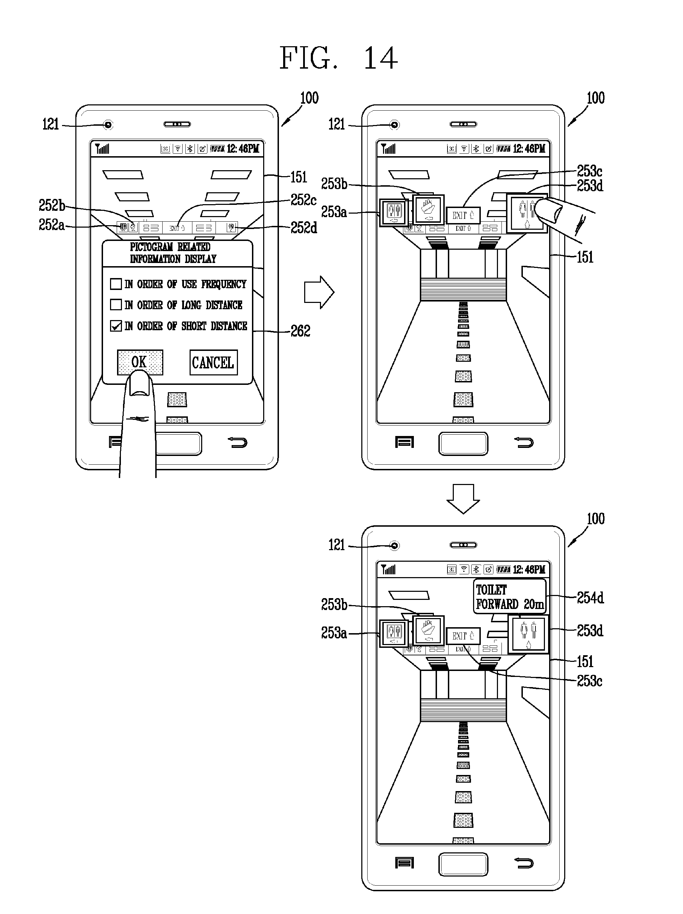

FIG. 14 is a conceptual view illustrating an operation example of the mobile terminal 100 according to FIG. 3. The mobile terminal 100 includes the camera unit 121, the display unit 151, the pictogram extraction unit 182 (See FIG. 1) and the controller 180 (See FIG. 1).

Referring to FIG. 14, the display unit 151 may display image information obtained from the camera unit 121. The obtained image information may include at least one pictogram 252a to 252d.

The controller 180 may control graphic information of pictogram images 253a to 253d, based on at least one of information use frequency and information on the distance to the terminal main body. In this case, the graphic information of the pictogram images 253a to 253d may include at least one of the color, shape, size, transparency and 3D depth of the pictogram images 253a to 253d.

To this end, the display unit 151 may display a popup window 262 receiving whether to differently display the graphic information of the pictogram images 253a to 253d, based on condition information for differently displaying the graphic information of the pictogram images 253a to 253d, e.g., any one the information on use frequency and the information the distance to the terminal main body.

As shown in this FIG. 4, in a case where a user selects the information on the distance to the terminal main body as condition information on a popup window 262, the controller 180 may display the pictogram image 253d for the pictogram 252d corresponding to the destination nearest the terminal main body to be largest, and may display the pictogram image 253c for the pictogram 252c corresponding to the destination farthest from the terminal main body to be smallest.

The controller 180 may display, on the display unit 151, information 254d on the direction toward a destination corresponding to the pictogram 252d and the distance to the destination together with the pictogram image 253d for the pictogram 252d corresponding to the destination nearest the terminal main body.

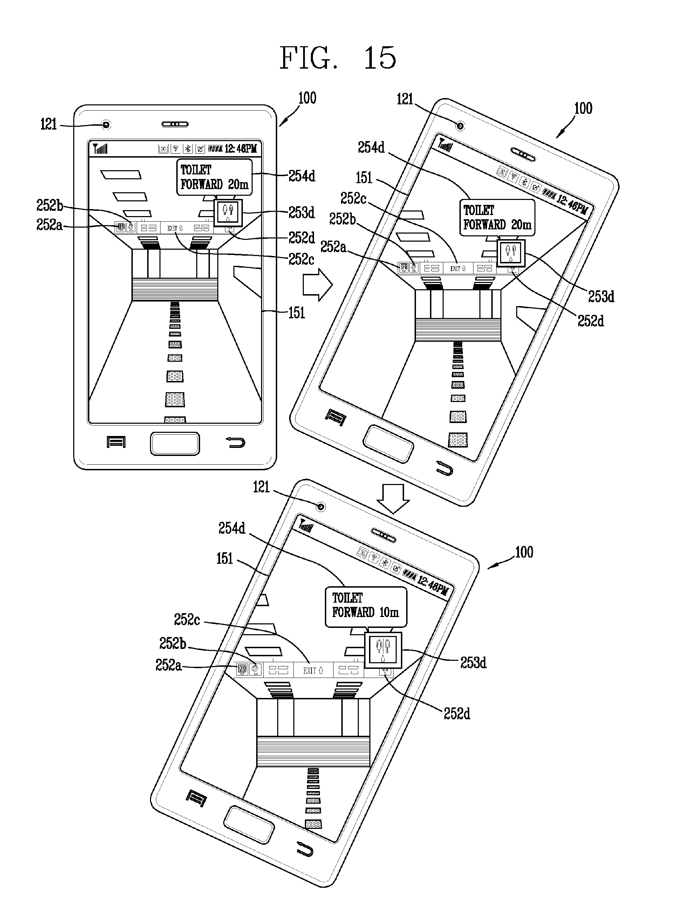

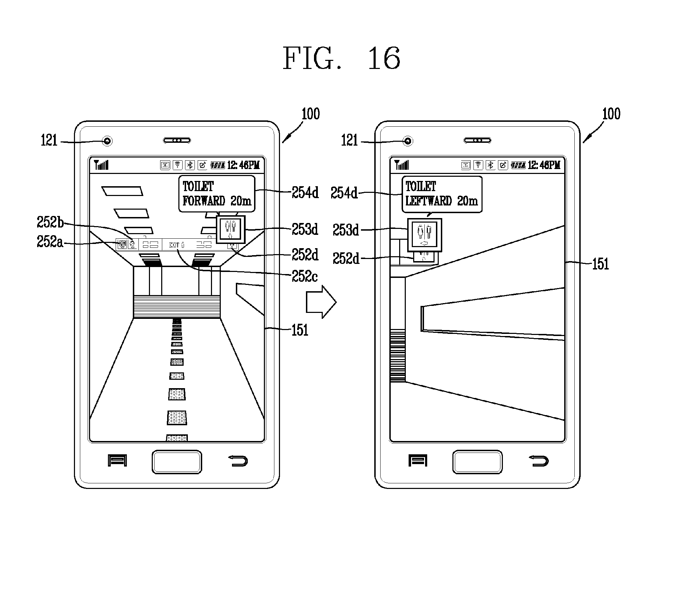

FIGS. 15 and 16 are conceptual views illustrating operation examples of the mobile terminal 100 according to FIG. 3. The mobile terminal 100 includes the camera unit 121, the display unit 151, the pictogram extraction unit 182 (See FIG. 1) and the controller 180 (See FIG. 1).

Referring to FIGS. 15 and 16, the display unit 151 may display image information obtained from the camera unit 121. The obtained image information may include at least one pictogram 252a to 252d.

The controller 180 may receive current position information using at least one of a global positioning system (GPA) and an access point AP. Subsequently, the controller 180 may detect destination position information according to the current position information from previously recorded information, and may detect information on the direction toward a destination corresponding to the selected pictogram 252d and the distance to the destination, using the destination position information.

Accordingly, as shown in these FIGS. 15 and 16, the display unit 151 may display information 254d on the direction toward a destination corresponding to the selected pictogram 252d and the distance to the destination together with a pictogram image 253d for the pictogram 252d.

Meanwhile, the controller 180 may control the information on the direction toward the destination corresponding to the selected pictogram 252d, based on the direction of the terminal main body. Specifically, a gyro sensor may sense the direction of the terminal main body.

Accordingly, in a case where the terminal main body is rotated at a certain angle as shown in FIG. 15, the controller 180 can control the display direction of an image using the gyro sensor. The controller 180 may determine the information on the distance to the destination corresponding to the selected pictogram 252d, based on movement of the terminal main body. Subsequently, the display unit 151 may display the information 254d on the distance to the destination corresponding to the selected pictogram 252d to be corrected, based on the determination of the controller 180.

As shown in FIG. 16, the controller 180 may determine the information on the direction toward the destination corresponding to the selected pictogram 252d. Subsequently, the display unit 151 may display the information 254d on the direction toward the destination corresponding to the selected pictogram 252d to be corrected, based on the determination of the controller 180.

According to exemplary embodiments, the aforementioned methods can be embodied as computer readable codes on a computer-readable recording medium. Examples of the computer readable recording medium include a ROM, RAM, CD-ROM, magnetic tapes, floppy disks, optical data storage devices, and carrier waves (such as data transmission through the Internet).

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal(1 00), comprising:
a display unit(151) configured to at least display information;
a camera unit(121) configured to obtain image information corresponding to at least a still image or a moving image;
a pictogram extraction unit(182) configured to extract at least one pictogram from the obtained image information; and
a controller(180) configured to:
detect information related to the extracted at least one pictogram, the detected information comprising at least previously recorded information or currently searched information; and
control the display unit(151) to display the detected information overlapped with the obtained image information.

2. The mobile terminal(100) of claim 1, wherein the pictogram extraction unit(182) is further configured to:
extract at least one feature point of objectives included in the obtained image information based on edge information and outline information of the objectives; and
extract a pictogram from the previously recorded information, the pictogram corresponding to the extracted at least one feature point.

3. The mobile terminal(1 00) of claim 2, wherein the controller(180) is further configured to control the display unit(151) to display a plurality of pictograms based on the extracted at least one feature point if extraction of the pictogram from the previously recorded information is unsuccessful, the displayed plurality of pictograms having similar feature points as the pictogram corresponding to the extracted at least one feature point.

4. The mobile terminal(1 00) of claim 3, wherein the controller(180) is further configured to recognize at least one pictogram selected by a user from the displayed plurality of pictograms as a pictogram corresponding to the extracted at least one feature point.

5. The mobile terminal(1 00) of one of any claims 3 and 4, wherein:
the detected information comprises a pictogram image corresponding to the extracted at least one pictogram; and
the controller(180) is further configured to select at least one pictogram included in the obtained image information and control the display unit(151) to display a pictogram image corresponding to each of the selected at least one pictogram together with the corresponding pictogram.

6. The mobile terminal(1 00) of claim 5, wherein the controller(180) is further configured to select the at least one pictogram included in the obtained image information either based on the user's selection or based on at least information related to use frequency or information related to distance to a terminal main body.

7. The mobile terminal(100) of one of any claims 5 and 6, wherein the controller(180) is further configured to control the display unit(151) to display the pictogram image corresponding to each of the selected at least one pictogram such that the pictogram image is either overlapped with the corresponding pictogram or displayed at a position adjacent to the corresponding pictogram.

8. The mobile terminal(100) of one of any claims 5, 6 and 7, wherein the controller(180) is further configured to control graphic information of each displayed pictogram image based on the at least information related to use frequency or the information related to distance to the terminal main body.

9. The mobile terminal(100) of claim 8, wherein the graphic information comprises at least a color, a shape, a size transparency or a 3D depth of the corresponding displayed pictogram image.

10. The mobile terminal(1 00) of one of any claims 3 and 4, wherein:
the detected information comprises at least information related to a direction toward a destination corresponding to the extracted at least one pictogram or information related to a distance to the destination; and
the controller(180) is further configured to select at least one pictogram included in the obtained image information and control the display unit(151) to display the at least information related to the direction toward the destination or information related to the distance to the destination together with the selected at least one pictogram.

11. The mobile terminal(100) of claim 10, wherein the controller(180) is further configured to display the at least information related to the direction toward the destination or information related to the distance to the destination such that the displayed information is either overlapped with the selected at least one pictogram or displayed at a position adjacent to the selected at least one pictogram.

12. The mobile terminal(100) of claim 11, wherein the controller(180) is further configured to:
receive current position information by using at least a global positioning system (GPS) or an access point (AP);
detect destination position information from the previously recorded information according to the current position information; and
detect the at least information related to the direction toward the destination or information related to the distance to the destination by using the destination position information.

13. The mobile terminal(100) of claim 11, further comprising a gyro sensor configured to sense a direction of the terminal main body,
wherein the controller(180) is further configured to alter the displayed information related to the direction toward the destination based on the sensed direction of the terminal main body.

14. A control method of a mobile terminal(100), the method comprising:
obtaining image information corresponding to at least a still image or a moving image by using a camera(121)(S110);
extracting at least one pictogram from the obtained image information(S120);
detecting information related to the extracted at least one pictogram, the detected information comprising at least previously recorded information or currently searched information(S130); and
displaying the detected information overlapped with the obtained image information on a display unit(151)(S140).

15. The control method of claim 14, wherein extracting the at least one pictogram comprises:
extracting at least one feature point of objectives included in the obtained image information based on edge information and outline information of the objectives; and
extracting a pictogram from the previously recorded information, the pictogram corresponding to the extracted feature point.
